# EUROPEAN PATENT SPECIFICATION

(11) **EP 1 100 606 B1**
(45) Date of publication and mention of the grant of the patent: **12.05.2004**
(21) Application number: 98932875.2
(22) Date of filing: 26.06.1998
(51) Int. Cl.: B01D 35/30, B01D 24/18, C02F 9/00

(54) **WATER FILTRATION APPARATUS**
VORRICHTUNG ZUR FILTRIERUNG VON WASSER
APPAREIL DE FILTRAGE DE L'EAU

(43) Date of publication of application: 23.05.2001
(73) Proprietor: Reid, Roger P., Caldwell, ID 83606 (US)
(72) Inventor: Reid, Roger P., Caldwell, ID 83606 (US)
(74) Representative: Gee, Steven William
(86) International application number: PCT/US1998/013273
(87) International publication number: WO 2000/000266

(56) References cited:
- US-A- 4 595 497
- US-A- 4 882 061
- US-A- 5 082 557
- US-A- 5 232 590
- US-A- 5 248 417
- US-A- 5 681 459
- US-A- 5 714 066

## Description

### BACKGROUND OF THE INVENTION

### Field of the Invention

This invention relates generally to water filter or treatment systems, and, more specifically, to systems including intermediate storage for filtered or treated water.

### Related Art

Conventional filter systems permit water to flow in a single pass through filter or treatment media to a storage tank, water tap, or other usage device. When additional filtering of stored water is desired to remove contamination or biocides immediately before use, conventional systems typically require multiple filter canisters and complicated valving and piping.

Reid (U.S. Patent 5,248,417) discloses a double-flow-through system using a single filter housing. In this system, water flows through a single bed of filter media and then through a combination outlet-inlet port to a storage tank. When a tap or faucet is opened, the stored water flows back through the combination port into the filter housing to flow again through the filter media bed and then out to the tap. Thus, the Reid '417 system provides two passes through a single bed of filter media, with intermediate storage between the two passes.

The Reid '417 apparatus includes a pair of check valves to control flow to and from the combination port, and, thus, to and from storage. When the water tap is closed, unfiltered water enters the upper portion of the filter housing through the inlet port and is prevented by a cup-type check valve from flowing directly to the combination outlet-inlet port. The water passes a first time through the media and flows up through a filter tube to the combination port. A slit-type check valve disposed at the top of the filter tube prevents water from flowing from the combination port back into the filter tube. Once the water tap is opened, the cup-style check valve allows water to flow from storage through the combination port, through the cup check valve into the top portion of the filter housing, through the media a second time, and then to the tap.

Reid (U.S. Patent 5,232,590) discloses a water filtration apparatus with an internal bypass for conducting water from a water source to a storage tank without passing through the filter media. When the tap or faucet is opened, water then flows back from the storage tank into the filter housing, through the filter media, out the outlet port, and out of the faucet.

Grayson. et al. (U.S. Patent 5,082,557) discloses a filter control head for directing water to various locations. The control head can direct water to a first filter canister, to a drain, and to a storage tank. When a downstream usage device demands water, purified water may then flow from the storage tank, back to the control head, and then to a separate, second filter canister and a downstream usage device.

Burrows (U.S. Patent No. 4,595,497) teaches improvements in the reservoir of a reverse osmosis system, and illustrates a reverse osmosis unit containing a reverse osmosis cartridge and a carbon filter bed within in a single housing. A separate storage tank is provided to store purified water. This document discloses the features of the preamble of claim 1.

### SUMMARY OF THE INVENTION

An object of the present invention is to provide an economical system with at least two stages of filtration or treatment and with intermediate storage. The invention features a "split-flow". scheme in which inter-stage liquid is split off to intermediate storage and then subsequently returned to a later stage of processing, in the same filter housing, combined with liquid flowing through the first stage of processing. Another object of the invention is to provide a system having two or more filtration zones that each may be operated at differing flowrates.

The present invention comprises a filter housing comprising first and second filtering zones in series, and removal means and return means for conducting liquid to and from storage in between the zones. A single, intermediate combined outlet-inlet port accommodates flow in both the outward (to storage) and the inward (from storage) directions.

In a preferred embodiment, the intermediate outlet and inlet port is in fluid communication with an elongated filter tube extending through the first zone. The bottom of the filter tube is located near the bottom of the first zone and near the top of the second zone. Therefore, the filter tube collects water after passage through the first zone and allows it to flow out of the intermediate port to storage. Upon opening of a tap, which is in fluid communication with the outlet of the second zone, the stored water flows back into the intermediate port and into the filter tube, out of the bottom of the filter tube, through the second zone, and through an outlet port to the water tap.

Each of the multiple zones of the present invention may include one or more beds or layers comprising filter media, treatment media, or void space. In a preferred embodiment, the first zone comprises both anti-bacterial treatment with an iodinated resin and extended contact between bacteria and the iodide/iodine species in a void chamber. In this preferred embodiment, the intermediate storage provides additional contact time between biocide and bacteria, and the second zone filters the water and removes the biocide from the water immediately before use. The structural configurations of the zones may be designed for either axial flow, radial flow, or both types of flow distribution.

### BRIEF DESCRIPTION OF THE DRAWINGS

Fig. 1 is a cross-sectional side view of one embodiment of the invention having axial-flow first and second filtration zones.
Fig. 2A is a schematic cross-sectional side view of the embodiment of Fig. 1, showing liquid flow when the tap is closed and the storage tank is filling.
Fig. 2B is a schematic cross-sectional side view of the embodiment of Fig. 2A, showing liquid flow when the tap is open and the storage tank contains liquid.
Fig. 2C is a schematic cross-sectional side view of the embodiment of Fig. 2A, showing liquid flow when the tap is open and the storage tank is empty.
Fig. 3A is a schematic cross-sectional side view of an alternative embodiment of the invention having radial-flow first and second filtration zones, showing liquid flow when the tap is closed and the storage tank is filling:
Fig. 3B is a schematic cross-sectional side view of the embodiment of Fig. 3A, showing liquid flow when the tap is open and the storage tank contains liquid.
Fig. 3C is schematic cross-sectional side view of an alternative radial-flow embodiment of the invention, wherein a liquid-permeable elongated return tube is included in the first zone to create a media axial passage. Fig. 3C shows liquid flow when the tap is open and the storage tank contains liquid.
Fig. 4 is a schematic cross-sectional side view of an alternative embodiment of the invention, having a combined outlet-inlet intermediate port located part of the way down the filter housing sidewall, and showing liquid flow when the tap is open and the storage tank contains liquid.

### DETAILED DESCRIPTION OF THE PREFERRED EMBODIMENT

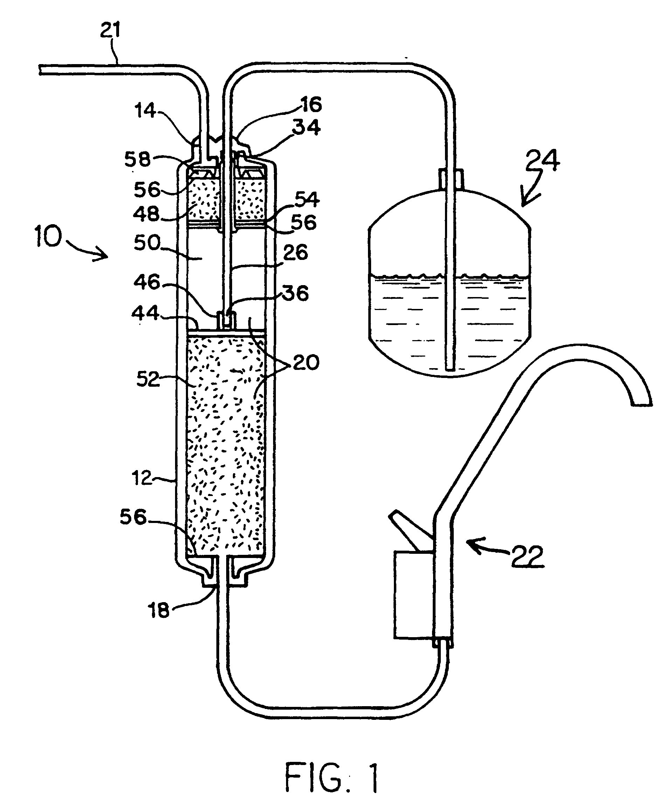

Referring to the Figures, there are shown several, but not the only, embodiments of the invented split-flow water filtration apparatus, which is herein called a "filter" but which may include adaptations for filtration, treatment, and other forms of component removal and addition from/to liquid. In Figure 1, there is shown the invented embodiment, including a central return tube that both collects water after the first stage of filtration and distributes water to the second stage of filtration.

Filter 10 comprises a filter housing 12 with inlet port 14, intermediate port 16, and outlet port 18. The housing 12 is a generally cylindrical shape with an interior cavity 20 for holding filter or treatment media. The inlet port 14 and intermediate port 16 extend through a first wall, preferably the top wall 15 of the housing 12, and the outlet port 18 extends through a second wall, preferably the bottom wall 19 of the housing 12. The inlet port 14 is in fluid communication with a water source 21 and the outlet port 18 is in fluid communication with a water usage device, such as a tap 22.

The intermediate port 16 is connected to and in fluid communication with storage tank 24. Associated with storage tank 24 is a pressurizing means, for pressurizing or pumping liquid back to the filter 10 when the tap 22 is opened. The pressurizing means may be apparatus to pressurize the tank, pressurize a bladder, or to pump liquid.

The central return tube 26, which in Figure 1 has a non-perforated side wall, extends down through the first zone 28 of the filter 10 and is in fluid communication with the intermediate port 16. The top end 30 of the return tube 26 may be sealed in the filter head by one or more o-rings 34. The bottom end 36 of the return tube 26 extends to the bottom 38 of the first zone 28 and to near the top 40 of the second zone 42. The tube bottom end 36 is held in the center of the cavity 20 by a retaining means, which is preferably a radially-disposed support disk 44 having a tube retainer 46 at the center of the disk 44 for connection to the tube bottom end 36.

The first zone 28 comprises a first bed 48 of resin followed by a dwell chamber 50, which is a void space not containing any filter or treatment media. The second zone 42 is a filter bed 52, containing a filter media such as activated carbon. Resin bed 48, dwell chamber 50, and filter bed 52 are separated/supported by support disks 54 and felt 56. The resin bed 48 is held in compaction by a spring disk 58, and the filter bed 52 is supported by felt 56 on top of the bottom interior surface of the housing 12. Disks 54, felt 56, and spring disk 58 support and/or separate the media beds while letting fluid pass from one bed or zone to the next, as is well-known in the art of filters.

The embodiment of Fig. 1 is designed for anti-bacterial treatment with an iodinated resin, followed by residence time in the dwell chamber 50 for extended contact between bacteria and the iodide/iodine species in the water for a high percentage of bacteria destruction. The dwell chamber 50, which is preferably empty except for the water being treated, maximizes residence time for a given volume of filter housing, as is disclosed in Hughes (U.S Patent 5,407,573). The storage tank 24 provides additional contact time, and the second zone 42 filters and removes biocide from the water immediately before use.

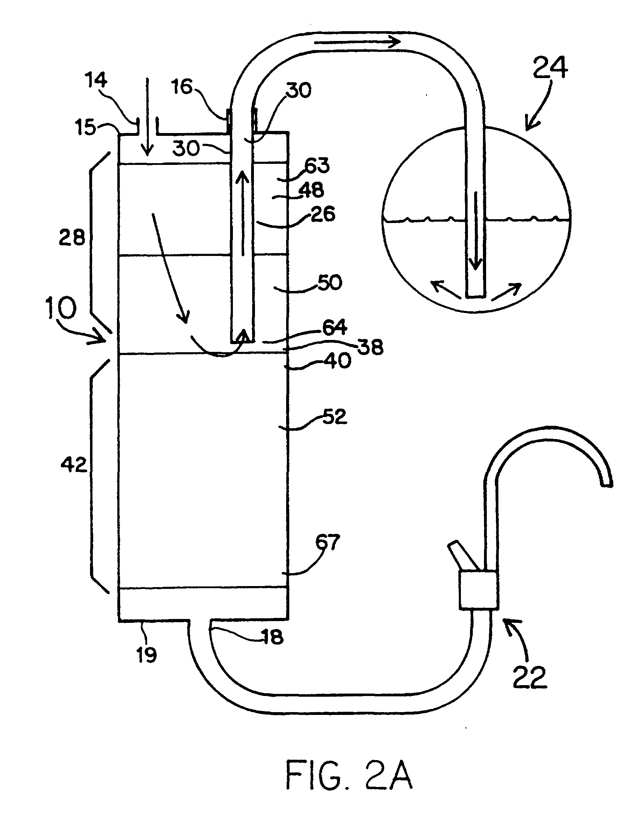

In use, when the tap 22 is closed, water or other fluid from the source enters the filter 10 through inlet port 14 and flows axially down through the first bed 48 and into the dwell chamber 50. From the dwell chamber 50, the water flows up through the central return tube 26 to the intermediate port 16 and to the storage tank 24. This first stage filtration flow scheme, shown schematically in Figure 2A, continues until the storage tank 24 is full or until the tap 22 is opened to demand water for use. When the storage tank 24 is full and the tap is closed, water flow stops.

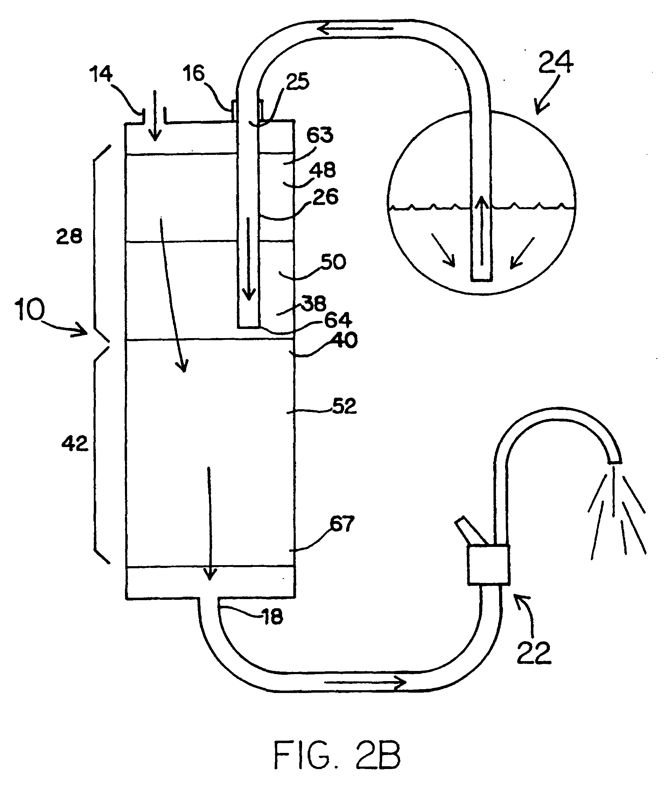

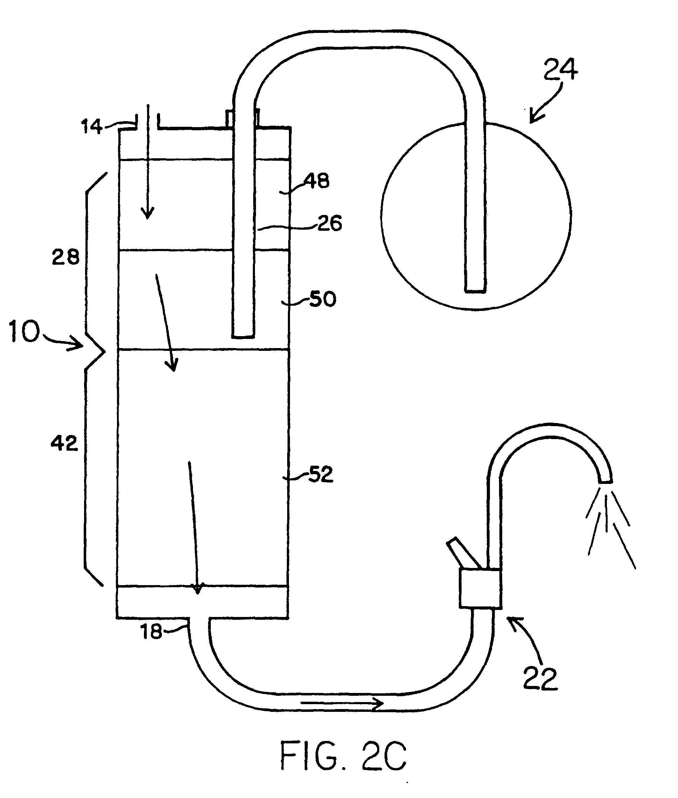

When the tap 22 is opened, as shown in Figure 2B, water flows in the reverse direction from the storage tank 24, enters the tube top opening 25, flows axially down through the tube 26 and out the tube bottom opening 64, through the second zone 42, and out the outlet port 18. In most designs, when the tap is open, some water also flows from the inlet port 14, down through both the first zone 28 and second zone 42, and out the outlet pon 18. When the tap 22 is open but the storage tank 24 is empty, as shown in Figure 2C, water continues to flow from the inlet port 14 through both zones 28, 42 and out the outlet port 18.

The split-flow filter 10 system allows the flowrates through the first zone 28 and second zone 42 to be different. The flowrates through the first and second zones are determined by the pressures of the water source and storage tank, the various pressure drops through the system, etc., as is known in filter design and fluid mechanics. Thus, when the tap 22 is open and the water flowing to the tap is a combination of water from storage 24 and water that has come from the inlet port 14 directly through the two zones, the relative proportions of these two water types is also a function of tank pressure, source pressure, pressure drop, etc. In the preferred system, the flow of water from storage 24 through the second zone 42 to the tap 22 is relatively fast compared to the flow of water either through the first zone 28 to storage 24 or through the first zone 28, second zone 42, and tap 22.

In Figures 1 and 2A-C, the first zone 28 is portrayed as having a central return tube 26 with a non-liquid-permeable side wall. This non-permeable return tube is one example of a support structure defining an axial passage through the first zone 28.

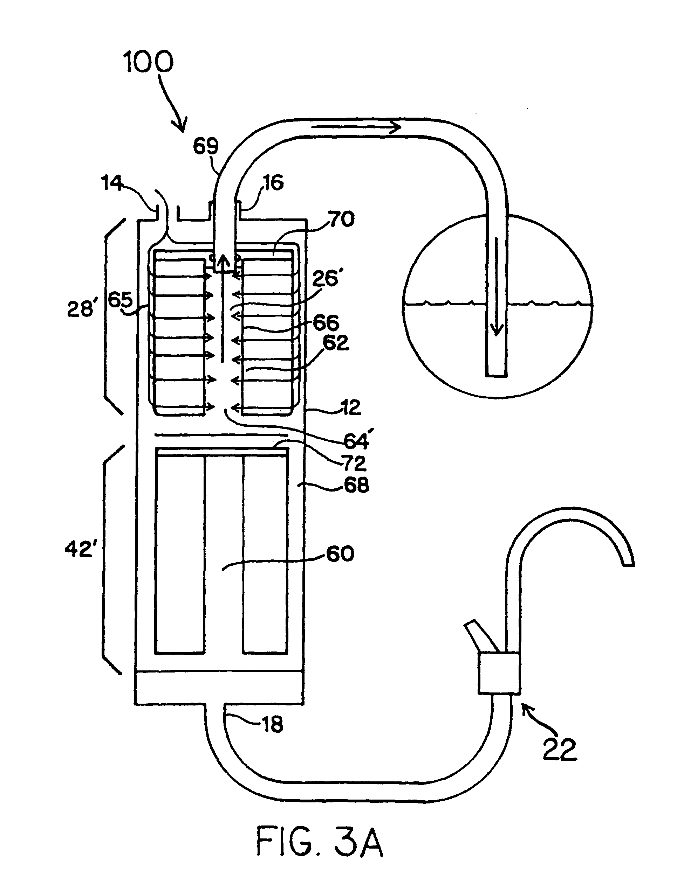

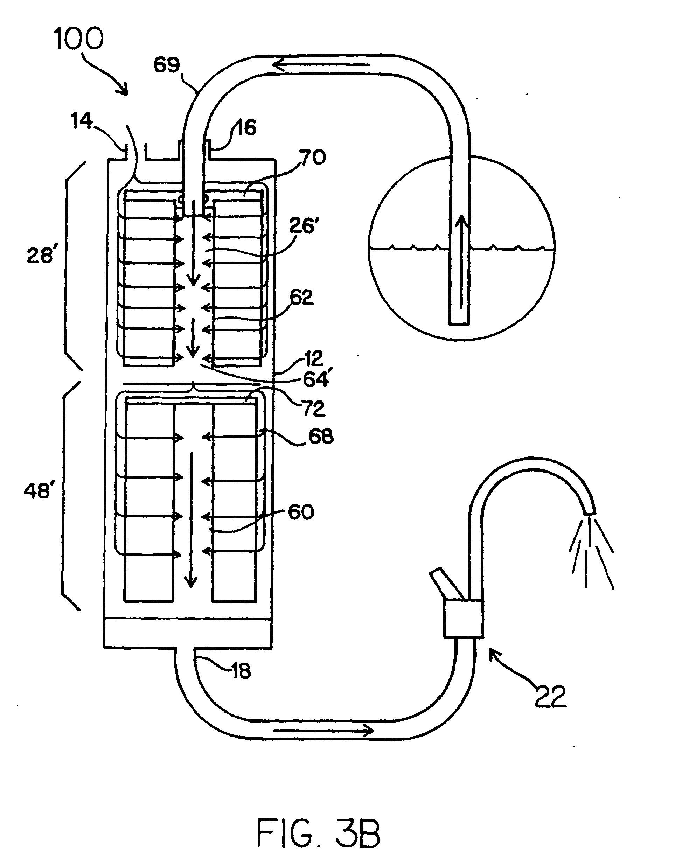

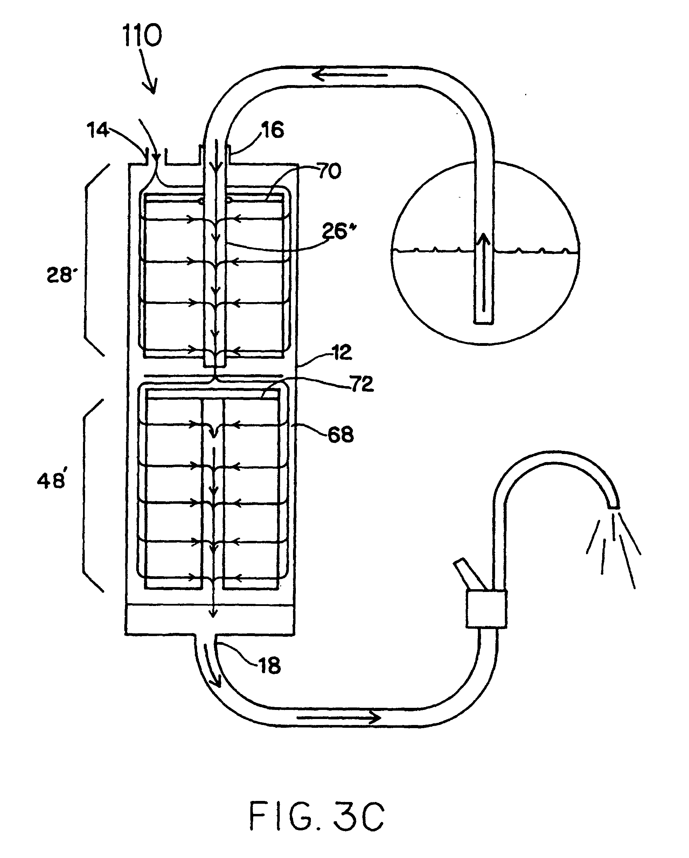

Alternative embodiments may have other means for creating an internal axial passage through the first zone media. For example, a solid media may have an internal media cavity defined by the media inside diameter and running axially through the media. Such an embodiment is depicted in the radial-flow filter 100 of Figs. 3A and 3B. In such a solid media embodiment, a separate support structure at the media's inside diameter is normally unnecessary. Alternatively, another structure for creating an axial passage through media is a perforated, slotted, or otherwise liquid permeable central return tube (such as shown in the filter 110 of Figure 3C) that holds the media in place but allows radial-flow of liquid through the media and through the wall of the return tube. Such a return tube may be used for granular media in the first and/or second zone.

In the radial-flow filter embodiment 100 of Fig. 3A, unfiltered water enters the inlet port 14, flows radially through the first zone 28', flows out from the inside diameter 62 of the media into the media cavity 26', and flows up to the intermediate port 16 and to storage 24. When the tap 22 is opened, as in Fig. 3B, the stored water flows back into the intermediate port 16, down through the media cavity 26', out the bottom 64' of the cavity 26', and to the second zone 42'. In the second zone 42', the water flows radially into the second zone media cavity 60 formed by the inside diameter of the radial flow media, to the outlet port 18, and to the tap 22.

Included in the filter embodiment 100 portrayed in Fig. 3A and B is a sealing means resting on top of the media, for sealing the media to the tube 69 that extends through the intermediate port 16. The sealing member 70 has a plate covering the top end surface of the media and one or more o-rings for creating a seal between the member 70 and the tube 69. Alternatively, a sealing member may be designed to seal the media to the head of the filter at the intermediate port 16. Such an alternative embodiment includes a plate for covering the media, and a cylindrical extension upending to contact and seal with the intermediate port by the use of o-rings encircling the upper end of the cylindrical extension.

A sealing means is preferably located on the top end surface of the second zone media. The sealing means may be an end plate 72 that prevents water from entering media cavity 60 from the top. Both end plate 72 and the first zone sealing member 70 may be attached to media by, for example, hot gluing.

Therefore, in both axial-flow and radial flow embodiments, the first and second zones are in series-flow liquid communication, wherein the effluent of the first zone flows directly. or by way of storage, to the inlet of the second zone. The first zone inlet may be either the top end 63 of a axial-flow bed or the outer annular surface 65 of a radial-flow bed. The first zone outlet may be either the bottom end 38 of an axial-flow bed or the inner annular surface 66 of a radial-flow bed. The inlet and outlet of an axial-flow second zone are at the top end 40 and bottom end 67 of the zone, respectively. The inlet and outlet of a radial-flow second zone are the outer annular and inner annular surfaces, respectively. Therefore, by saying the central return tube bottom opening 64 or the bottom 64' of the media cavity is "near the second zone inlet", it is meant that the bottom opening 64 or cavity bottom 64' may either be near the top end of an axial-flow bed (so that the first zone effluent flows axially down into the second zone) or near the top end of a radial-flow bed (so that the first zone effluent flows down to the annular feed 68 space and then radially into the second zone). Thus, the return tube bottom 64 or cavity bottom 64' is in fluid communication with the second zone inlet, whether the second zone is axial or radial.

Optionally, the present invention may include an adjustment means for shortening the length of the central return tube 26, 26", in order to adjust the location of the first and second zones in the filter cavity and change the portions of cavity used as first and second zones. In an axial-flow filter, for example, shortening or lengthening the return tube 26 changes the location of the first zone outlet and second zone inlet, and allows the filter cavity to be loaded with different volumes of first and second zone media.

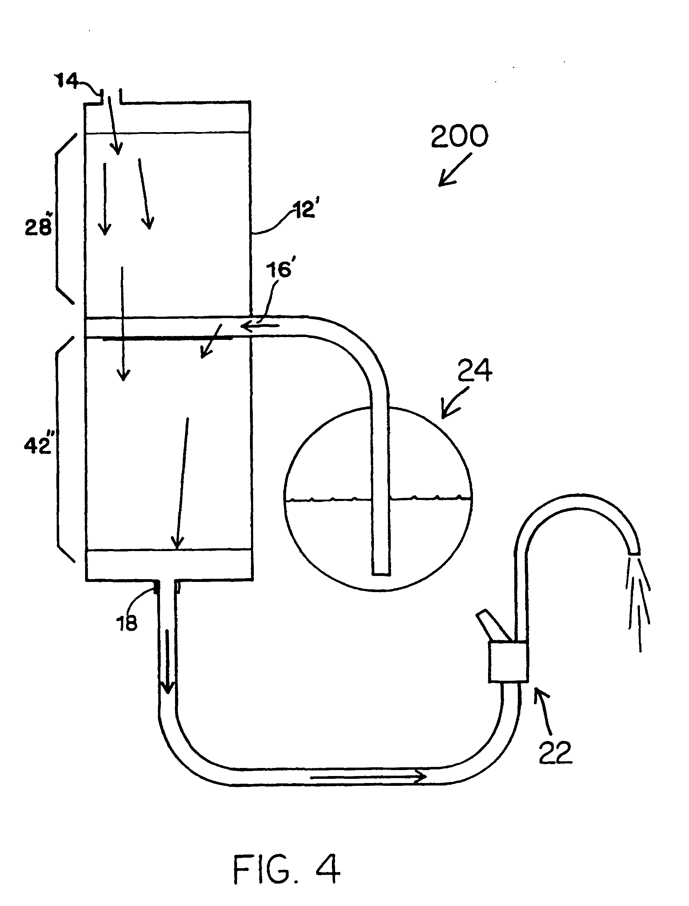

Figure 4 illustrates another alternate filter embodiment 200, in which the combined outlet-inlet intermediate port 16' is located in a third wall of the housing 12', that is, the sidewall of the preferably cylindrical housing 12'. In this embodiment, water flows through the first zone 28 " and to storage through the intermediate port 16', which is located near the bottom of the first zone 28". When the tap 22 demands water, the stored water returns to the filter through the intermediate port 16', and flows through the second zone 42" to the tap 22. As in the other embodiments, the pressure balance at the various locations through the system would control the flows through the first zone 28", intermediate port 16', and second zone 42" of this filter and would control the ratio of storage water/ first-zone-water flowing to the second zone and out to the tap.

The invention preferably has only two zones with adaptation for flow out and in between the two zones, preferably via a single combined outlet-inlet port. Alternatively, the invention may include more than two stages, with removal and return of the liquid intermediate between all or some of the stages. Each removal and return of liquid between stages preferably is done via a combined (single) intermediate port located in each inter-zone area, rather than via separate outlet port and inlet port structures in each of the inter-zone areas. Thus, preferably, the stages of filtration/treatment are accomplished in zones with combined outlet-inlet intermediate ports that are all contained in a single filter housing, and, preferably, only a single pipe extends out from each combined outlet-inlet intermediate port. The preferred embodiments, with their minimized vessel, piping and valving requirements, are therefore economical and efficient in structure, use, and installation.

The plurality of zones in the filter housing may all be axial-flow, as illustrated in Figure 1, may all be radial flow, as illustrated in Figure 3 A, B and C, or some may be axial-flow and some may be radial. Conventional aspects of filter design, such as retainer disks, felt, o-rings, port connections, housing shape, etc., may be varied according to known filter art and still be within the scope of this invention.

The configuration of the filtering/treatment zones may be changed to accommodate various types of filter or treatment media. For example, the first zone media will include biocide resins, and may also include ion exchange resins for softening, demineralizing, desilicizing, or disinfecting, and resins for removal of tannin/organic, nitrate, and alkalinity, etc. Desirable second zone media may include felt wrap, pleated material, folded material, carbon, block activated carbon, granular carbon, etc. Many combinations and arrangements of media may be used, including a plurality of beds within a single zone.

In this Description and the Claims, the words "filtering", "filtration", "treatment", or "filtration media" are not intended to limit the invention to media which performs a particular filtration function, but, rather, include media that removes material from a liquid, adds material to a liquid, otherwise treats or transforms a liquid, or is inert to the liquid under different circumstances. The zones may also be empty or have spaces that are empty of media, as in the dwell chamber in Figure 1. Also in the Description and Claims, the terms "up" or "down" are not intended to limit the invention to particular orientations relative to the ground or gravity, but are used to clarify directions of liquid flow relative to the apparatus.

Although this invention has been described above with reference to particular means, materials, dimensions, embodiments, and methods of installation, it is to be understood that the invention is not limited to these disclosed particulars, but extends instead to all equivalents within the scope of the following claims.

## Claims

1. A filter apparatus for filtering liquid from a source and delivering the liquid to a storage tank and to a tap, the filter apparatus comprising:
a single housing defining an interior cavity having a plurality of zones, said zones comprising a first zone and a second zone in series-flow liquid communication, wherein the first zone and second zone each have a zone inlet and a zone outlet,
said single housing including a single inlet port and an outlet port, said single inlet port being in fluid communication with the source and said outlet port being in fluid communication with the tap,
the single housing further comprising a single combined outlet-inlet intermediate port in fluid communication with the first zone outlet and with the second zone inlet, the combined outlet-inlet intermediate port being adapted both to remove liquid from between the first zone and the second zone so as to remove said liquid from the housing for storage in a storage tank, and to return liquid from the storage tank to the housing in between the first zone and the second zone for flow through the second zone to said outlet port,
**characterised in that**
said outlet port is the only outlet port of the housing so that the housing has only three liquid ports, which are said single inlet port, a single outlet port, and said single combined outlet-inlet intermediate port,
**in that** an anti-bacterial media is received within at least part of the said first zone adapted to impart biocide into liquid from said source, and a biocide removal media is received in at least part of the said second zone,
and **in that** removal of the liquid from the housing for storage in the storage tank provides an extended time for said biocide to kill bacteria in the liquid.

2. A filtration apparatus as set forth in Claim 1, wherein:
the housing has a top wall, a bottom wall, and a side wall, and
wherein said inlet port is located near the top wall, said outlet port is located near the bottom wall, and said intermediate port is located in the top wall.

3. A filtration apparatus as set forth in Claim 1, wherein:
the housing has a top wall, a bottom wall, and a side wall, and
said inlet port is located in the top wall, said outlet port is located in the bottom wall, and said intermediate port is located in the side wall between the first and second zones.

4. A filtration apparatus as in Claim 2, wherein the housing has a longitudinal axis extending between the top wall and the bottom wall, and wherein the filter apparatus further comprises an elongated return tube extending axially through said first zone, the return tube having a top opening in fluid communication with said intermediate port and a bottom opening near and in fluid communication with the second zone inlet, the return tube being adapted to conduct liquid, after it has passed through the first zone, to the intermediate port for passage to the storage tank, and the return tube being adapted to conduct liquid, returning from the storage tank through the intermediate port, to the second zone inlet.

5. A filtration apparatus as set forth in Claim 4, wherein the said first zone comprises an axial-flow zone.

6. A filtration apparatus as set forth in Claim 4, wherein the said first zone comprises a radial-flow zone and the elongated return tube is liquid permeable.

7. A filtration apparatus as set forth in Claim 4, wherein the said second zone comprises an axial-flow zone.

8. A filtration apparatus as set forth in Claim 4, wherein the said second zone comprises a radial-flow zone.

9. A filtration apparatus as set forth in Claim 4, wherein said first and second zones are axial-flow zones and the filtration apparatus further comprises an adjustment means for changing the length of said axially-extending elongated return tube to change the distance of the return tube bottom opening from the top wall to change the location of the second zone inlet relative to the top wall.

10. A filtration apparatus as in Claim 2, wherein the housing has a longitudinal axis extending between the top wall and the bottom wall, and the filter apparatus comprises:
a solid media block received within at least a part of the first zone, and a media received in at least a part of the second zone,
wherein said solid media block has a media cavity extending axially through said solid media block, the media cavity having a top opening in fluid communication with said intermediate port and a cavity bottom near and in fluid communication with the second zone inlet, the media cavity being adapted to conduct liquid, after it has passed through the first zone, to said intermediate port for passage to the storage tank and the media cavity further being adapted to receive liquid from the storage tank through the intermediate port and to conduct the liquid to the second zone inlet.

11. A filtration apparatus as set forth in Claim 10, wherein the said first zone comprises a radial-flow zone.

12. A method of filtering liquid through a filter, the method comprising:
providing a filter with a filter cavity in a single filter housing having liquid ports, comprising a single inlet port which delivers liquid to the filter from a liquid source, an outlet port which conveys liquid to a tap, and a single combined outlet-inlet intermediate port which conveys liquid to and from a storage tank;
forcing unfiltered liquid through said single inlet port into a first zone of the filter cavity;
collecting the first-zone-treated liquid at a fluid outlet of the first zone and removing it from the filter by way of said combined outlet-inlet intermediate port;
conducting the collected liquid to a storage tank;
retaining the liquid in the storage tank;
returning the liquid from said storage tank to the filter by forcing the liquid in a reverse direction to the fluid outlet of the first zone by way of said combined outlet-inlet intermediate port and then to an inlet of a second zone of the filter cavity, the second zone inlet being in fluid communication with the first zone outlet;
forcing the liquid through said second zone for treatment therein; and
removing the second-zone-treated liquid from the filter through said outlet port,
**characterized in that**
said outlet port is the only outlet port of the housing so that the housing has only three liquid ports, which are said single inlet port, a single outlet port, and said single combined outlet-inlet intermediate port,
**in that** an anti-bacterial media comprising iodinated resin is provided within at least part of the said first zone and is adapted to impart biocide into liquid from said source, and a biocide removal media is received in at least part of the said second zone,
**in that** all of the first-zone-treated liquid is collected for removal from said combined outlet-inlet intermediate port,
and **in that** the liquid is retained in the storage tank to allow the biocide to kill bacteria therein.

13. A method as in Claim 12, wherein the fluid outlet of the first zone comprises a central return tube extending down through the first zone and having an open bottom end.

14. A method as in Claim 12, wherein the fluid outlet of the first zone comprises a media cavity and the first-zone-treated liquid is collected in the media cavity and conducted to the storage tank, and then returned to the media cavity and forced to the inlet of the second zone.

## Patentansprüche

1. Filtervorrichtung zum Filtern von Flüssigkeit von einer Quelle und zum Liefern der Flüssigkeit zu einem Sammelbehälter und zu einem Hahn, wobei die Filtervorrichtung Folgendes umfasst:
ein einzelnes Gehäuse, das einen inneren Hohlraum mit einer Mehrzahl von Zonen definiert, wobei die genannten Zonen eine erste Zone und eine zweite Zone in Reihendurchfluss-Flüssigkeitskommunikation umfassen, wobei die erste Zone und die zweite Zone jeweils einen Zoneneinlass und einen Zonenauslass haben, wobei das genannte einzelne Gehäuse einen einzelnen Einlasskanal und einen Auslasskanal hat,
wobei der genannte einzelne Einlasskanal in Fluidkommunikation mit der Quelle steht und der genannte Auslasskanal in Fluidkommunikation mit dem Hahn steht,
wobei das einzelne Gehäuse ferner einen einzelnen kombinierten Auslass-Einlass-Zwischenkanal aufweist, der mit dem Auslass der ersten Zone und mit dem Einlass der zweiten Zone in Fluidkommunikation steht, wobei der kombinierte Auslass-Einlass-Zwischenkanal die Aufgabe hat, Flüssigkeit von zwischen der ersten Zone und der zweiten Zone zu entfernen, um die genannte Flüssigkeit aus dem Gehäuse zur Aufbewahrung in einem Sammelbehälter zu entfernen, und um Flüssigkeit aus dem Sammelbehälter zum Gehäuse zwischen der ersten Zone und der zweiten Zone zurückzuführen zum Durchfließen der zweiten Zone zu dem genannten Auslasskanal,
**dadurch gekennzeichnet, dass**
der genannte Auslasskanal der einzige Auslasskanal des Gehäuses ist, sodass das Gehäuse nur drei Flüssigkeitskanäle hat, nämlich den genannten einzelnen Einlasskanal, einen einzelnen Auslasskanal und den genannten einzelnen kombinierten Auslass-Einlass-Zwischenkanal,
in wenigstens einem Teil der genannten ersten Zone ein antibakterielles Mittel aufgenommen ist, um an die Flüssigkeit aus der genannten Quelle Biozid abzugeben, und in wenigstens einem Teil der genannten zweiten Zone ein Biozidentfernungsmittel aufgenommen ist, und das Entfernen der Flüssigkeit aus dem Gehäuse zur Aufbewahrung im Sammelbehälter dem genannten Biozid mehr Zeit zum Abtöten von Bakterien in der Flüssigkeit gibt.

2. Filtriervorrichtung nach Anspruch 1, bei der das Gehäuse eine obere Wand, eine untere Wand und eine Seitenwand hat und
bei der der genannte Einlasskanal sich nahe der oberen Wand befindet, der genannte Auslasskanal sich nahe der unteren Wand befindet und der genannte Zwischenkanal sich in der oberen Wand befindet.

3. Filtriervorrichtung nach Anspruch 1, bei der das Gehäuse eine obere Wand, eine untere Wand und eine Seitenwand hat
und der genannte Einlasskanal sich in der oberen Wand befindet, der genannte Auslasskanal sich in der unteren Wand befindet und der genannte Zwischenkanal sich in der Seitenwand zwischen der ersten und der zweiten Zone befindet.

4. Filtriervorrichtung nach Anspruch 2, bei der das Gehäuse eine Längsachse hat, die sich zwischen der oberen Wand und der unteren Wand erstreckt, und bei der die Filtervorrichtung ferner eine längliche Rücklaufröhre umfasst, die sich axial durch die genannte erste Zone erstreckt, wobei die Rücklaufröhre eine obere Öfinung, die mit dem genannten mittleren Kanal in Fluidkommunikation steht, und eine nahe am Einlass der zweiten Zone befindliche und mit ihm in Fluidkommunikation stehende untere Öffnung hat, wobei die Rücklaufröhre die Aufgabe hat, Flüssigkeit zum Zwischenkanal zum Weiterleiten zum Sammelbehälter zu leiten, nachdem sie die erste Zone durchlaufen hat, und die Rücklaufröhre die Aufgabe hat, aus dem Sammelbehälter durch den Zwischenkanal zurückkehrende Flüssigkeit zum Einlass der zweiten Zone zu leiten.

5. Filtriervorrichtung nach Anspruch 4, bei der die genannte erste Zone eine Axialströmungszone aufweist.

6. Filtriervorrichtung nach Anspruch 4, bei der die genannte erste Zone eine Radialströmungszone aufweist und die längliche Rücklaufröhre flüssigkeitsdurchlässig ist.

7. Filtriervorrichtung nach Anspruch 4, bei der die genannte zweite Zone eine Axialströmungszone aufweist.

8. Filtriervorrichtung nach Anspruch 4, bei der die genannte zweite Zone eine Radialströmungszone aufweist.

9. Filtriervorrichtung nach Anspruch 4, bei der die genannte erste und zweite Zone Axialflusszonen sind und die Filtriervorrichtung ferner eine Einstellvorrichtung zum Ändern der Länge der genannten sich axial erstreckenden länglichen Rücklaufröhre aufweist zum Ändern des Abstands der unteren Rücklaufröhrenöfnung von der oberen Wand, um die Lage des Einlasses der zweiten Zone relativ zur oberen Wand zu ändern.

10. Filtriervorrichtung nach Anspruch 2, bei der das Gehäuse eine Längsachse hat, die sich zwischen der oberen Wand und der unteren Wand erstreckt, und die Filtervorrichtung Folgendes umfasst:
einen in wenigstens einem Teil der ersten Zone aufgenommenen massiven Mittelblock und ein in wenigstens einem Teil der zweiten Zone aufgenommenes Mittel, wobei der genannte massive Mittelblock einen Mittelhohlraum hat, der sich axial durch den genannten massiven Mittelblock erstreckt, wobei der Mittelhohlraum eine obere Öffnung, die in Fluidkommunikation mit dem genannten Zwischenkanal steht, und
einen Hohlraumboden nahe und in Fluidkommunikation mit dem Einlass der zweiten Zone hat, wobei der Mittelhohlraum die Aufgabe hat, Flüssigkeit zum genannten Zwischenkanal zum Weiterleiten zum Sammelbehälter zu leiten, nachdem sie die erste Zone durchlaufen hat, und der Mittelhohlraum ferner die Aufgabe hat, Flüssigkeit aus dem Sammelbehälter durch den Zwischenkanal aufzunehmen und die Flüssigkeit zum Einlass der zweiten Zone zu leiten.

11. Filtrationsvorrichtung nach Anspruch 10, bei der die genannte erste Zone eine Radialströmungszone aufweist.

12. Verfahren zum Filtern von Flüssigkeit durch ein Filter, wobei das Verfahren Folgendes umfasst:
Bereitstellen eines Filters mit einem Filterhohlraum in einem Einfiltergehäuse mit Flüssigkeitskanälen, umfassend einen einzelnen Einlasskanal, der Flüssigkeit von einer Flüssigkeitsquelle zum Filter liefert, einen Auslasskanal, der Flüssigkeit zu einem Hahn leitet, und einen einzelnen kombinierten Auslass-Einlass-Zwischenkanal, der Flüssigkeit zu und von einem Aufbewahrungsbehälter leitet,
Zwingen von ungefilterter Flüssigkeit durch den genannten einzelnen Einlasskanal in eine erste Zone des Filterhohlraums,
Sammeln der in der ersten Zone behandelten Flüssigkeit an einem Fluidauslass der ersten Zone und ihr Entfernen aus dem Filter mithilfe des genannten kombinierten Auslass-Einlass-Zwischenkanals,
Leiten der gesammelten Flüssigkeit zu einem Sammelbehälter,
Aufbewahren der Flüssigkeit im Sammelbehälter,
Zurückführen der Flüssigkeit aus dem genannten Sammelbehälter zum Filter, indem die Flüssigkeit mithilfe des genannten kombinierten Auslass-Einlass-Zwischenkanals in einer umgekehrten Richtung zum Fluidauslass der ersten Zone und dann zu einem Einlass einer zweiten Zone des Filterhohlraums gezwungen wird, wobei der Einlass der zweiten Zone in Fluidkommunikation mit dem Auslass der ersten Zone steht,
Zwingen der Flüssigkeit durch die genannte zweite Zone zur Behandlung in ihr und Entfernen der in der zweiten Zone behandelten Flüssigkeit durch den genannten Auslasskanal aus dem Filter,
**dadurch gekennzeichnet, dass**
der genannte Auslasskanal der einzige Auslasskanal des Gehäuses ist, sodass das Gehäuse nur drei Flüssigkeitskanäle hat, nämlich den genannten einzelnen Einlasskanal, einen einzelnen Auslasskanal und den genannten einzelnen kombinierten Auslass-Einlass-Zwischenkanal,
dass ein antibakterielles Mittel, umfassend jodiertes Harz, in wenigstens einem Teil der genannten ersten Zone bereitgestellt ist und ausgeführt ist, um Biozid in die Flüssigkeit von der genannten Quelle abzugeben, und ein Biozidentfernungsmittel in wenigstens einem Teil der genannten zweiten Zone aufgenommen ist,
dass die in der ersten Zone behandelte Flüssigkeit sämtlich gesammelt wird zum Entfernen aus dem genannten kombinierten Auslass-Einlass-Zwischenkanal und
dass die Flüssigkeit im Sammelbehälter aufbewahrt wird, damit das Biozid die in ihr enthaltenen Bakterien abtöten kann.

13. Verfahren nach Anspruch 12, bei dem der Flüssigkeitsauslass der ersten Zone eine zentrale Rücklaufröhre umfasst, die sich nach unten durch die erste Zone erstreckt und ein offenes unteres Ende hat.

14. Verfahren nach Anspruch 12, bei dem der Flüssigkeitsauslass der ersten Zone einen Mittelhohlraum umfasst und die in der ersten Zone behandelte Flüssigkeit im Mittelhohlraum gesammelt und zum Sammelbehälter geleitet wird und dann zum Mittelhohlraum zurückgeführt und zum Einlass der zweiten Zone gezwungen wird.

## Revendications

1. Appareil de filtrage destiné à filtrer du liquide en provenance d'une source et à acheminer le liquide vers un réservoir de stockage et vers un robinet, l'appareil de filtrage comportant :
un seul boîtier définissant une cavité intérieure ayant une pluralité de zones, lesdites zones comportant une première zone et une deuxième zone en communication liquide de type à écoulement en série, dans lequel la première zone et la deuxième zone disposent chacune d'une entrée de zone et d'une sortie de zone, ledit seul boîtier comprenant un seul orifice d'entrée et un orifice de sortie, ledit seul orifice d'entrée étant en communication fluide avec la source et ledit orifice de sortie étant en communication fluide avec le robinet,
le seul boîtier comportant par ailleurs un seul orifice intermédiaire du type sortie-entrée mixte en communication fluide avec la sortie de la première zone et avec l'entrée de la deuxième zone, l'orifice intermédiaire du type sortie-entrée mixte étant adapté à la fois pour retirer le liquide se trouvant entre la première zone et la deuxième zone afin de retirer ledit liquide du boîtier pour stockage dans un réservoir de stockage, et pour renvoyer le liquide en provenance du réservoir de stockage vers le boîtier entre la première zone et la deuxième zone pour écoulement au travers de la deuxième zone vers ledit orifice de sortie,
**caractérisé en ce que**
ledit orifice de sortie est le seul orifice de sortie du boîtier de telle manière que le boîtier ne dispose que de trois orifices pour le liquide, qui sont ledit seul orifice d'entrée, un seul orifice de sortie, et ledit seul orifice intermédiaire du type sortie-entrée mixte,
**en ce qu'**un matériau antibactérien est reçu à l'intérieur d'au moins une partie de ladite première zone et est adapté pour transmettre un biocide dans le liquide en provenance de ladite source, et **en ce qu'**un matériau de retrait du biocide est reçu dans au moins une partie de ladite deuxième zone,
et **en ce que** le retrait du liquide en provenance du boîtier pour stockage dans le réservoir de stockage fournit audit biocide du temps supplémentaire pour tuer les bactéries présentes dans le liquide.

2. Appareil de filtrage selon l'énoncé de la revendication 1, dans lequel :
le boîtier présente une paroi supérieure, une paroi inférieure, et une paroi latérale, et dans lequel ledit orifice d'entrée est situé à proximité de la paroi supérieure, ledit orifice de sortie est situé à proximité de la paroi inférieure, et ledit orifice intermédiaire est situé dans la paroi supérieure.

3. Appareil de filtrage selon l'énoncé de la revendication 1, dans lequel :
le boîtier présente une paroi supérieure, une paroi inférieure, et une paroi latérale, et dans lequel ledit orifice d'entrée est situé dans la paroi supérieure, ledit orifice de sortie est situé dans la paroi inférieure, et ledit orifice intermédiaire est situé dans la paroi latérale entre la première zone et la deuxième zone.

4. Appareil de filtrage selon la revendication 2, dans lequel le boîtier présente un axe longitudinal se prolongeant entre la paroi supérieure et la paroi inférieure, et dans lequel l'appareil de filtrage comporte par ailleurs un tube de retour allongé se prolongeant de manière axiale au travers de ladite première zone, le tube de retour ayant une ouverture supérieure en communication fluide avec ledit orifice intermédiaire et une ouverture inférieure à proximité de et en communication fluide avec l'entrée de la deuxième zone, le tube de retour étant adapté pour conduire le liquide, après qu'il soit passé au travers de la première zone, vers l'orifice intermédiaire pour passage dans le réservoir de stockage, et le tube de retour étant adapté pour conduire le liquide, qui revient du réservoir de stockage au travers de l'orifice intermédiaire, vers l'entrée de la deuxième zone.

5. Appareil de filtrage selon l'énoncé de la revendication 4, dans lequel ladite première zone comporte une zone à écoulement dans le sens axial.

6. Appareil de filtrage selon l'énoncé de la revendication 4, dans lequel ladite première zone comporte une zone à écoulement dans le sens radial et dans lequel le tube de retour allongé est perméable au liquide.

7. Appareil de filtrage selon l'énoncé de la revendication 4, dans lequel ladite deuxième zone comporte une zone à écoulement dans le sens axial.

8. Appareil de filtrage selon l'énoncé de la revendication 4, dans lequel ladite deuxième zone comporte une zone à écoulement dans le sens radial.

9. Appareil de filtrage selon l'énoncé de la revendication 4, dans lequel la première zone et la deuxième zone sont des zones à écoulement dans le sens axial et dans lequel l'appareil de filtrage comporte par ailleurs un moyen de réglage destiné à changer la longueur dudit tube de retour allongé se prolongeant de manière axiale pour changer la distance de l'ouverture inférieure du tube de retour par rapport à la paroi supérieure pour changer l'emplacement de l'entrée de la deuxième zone par rapport à la paroi supérieure.

10. Appareil de filtrage selon la revendication 2, dans lequel le boîtier présente un axe longitudinal se prolongeant entre la paroi supérieure et la paroi inférieure, et dans lequel l'appareil de filtrage comporte :
un bloc de matériau solide reçu à l'intérieur d'au moins une partie de la première zone, et un matériau reçu dans au moins une partie de la deuxième zone, dans lequel ledit bloc de matériau solide dispose d'une cavité de matériau se prolongeant de manière axiale au travers dudit bloc de matériau solide, la cavité de matériau ayant une ouverture supérieure en communication fluide avec ledit orifice intermédiaire et un fond de cavité à proximité de et en communication fluide avec l'entrée de la deuxième zone, la cavité de matériau étant adaptée pour conduire le liquide, après qu'il soit passé au travers de la première zone, vers ledit orifice intermédiaire pour passage dans le réservoir de stockage, et la cavité de matériau étant par ailleurs adaptée pour recevoir le liquide en provenance du réservoir de stockage au travers de l'orifice intermédiaire et pour conduire le liquide vers l'entrée de la deuxième zone.

11. Appareil de filtrage selon l'énoncé de la revendication 10, dans lequel ladite première zone comporte une zone à écoulement dans le sens radial.

12. Procédé de filtration de liquide au travers d'un filtre, le procédé comportant :
la présence d'un filtre avec une cavité de filtre dans un seul boîtier de filtre ayant des orifices pour liquide, comportant un seul orifice d'entrée qui achemine le liquide vers le filtre en provenance d'une source de liquide, un orifice de sortie qui amène le liquide vers un robinet, et un seul orifice intermédiaire du type sortie-entrée mixte qui amène le liquide vers et en provenance d'un réservoir de stockage ;
le forçage du liquide non filtré au travers dudit seul orifice d'entrée dans une première zone de la cavité de filtre ;
la collecte du liquide traité dans la première zone au niveau d'une sortie pour fluide de la première zone et son retrait du filtre par le biais dudit orifice intermédiaire du type sortie-entrée mixte ;
la conduite du liquide recueilli vers un réservoir de stockage ;
la retenue du liquide dans le réservoir de stockage ;
le renvoi du liquide en provenance dudit réservoir de stockage vers le filtre par forçage du liquide dans un sens inverse à la sortie pour fluide de la première zone par le biais dudit orifice intermédiaire du type sortie-entrée mixte et puis vers une entrée d'une deuxième zone de la cavité de filtre, l'entrée de la deuxième zone étant en communication fluide avec la sortie de la première zone ;
le forçage du liquide au travers de ladite deuxième zone pour y subir le traitement ; et
le retrait du liquide traité dans la deuxième zone en provenance du filtre au travers dudit orifice de sortie,
**caractérisé en ce que**
ledit orifice de sortie est le seul orifice de sortie du boîtier de telle manière que le boîtier ne dispose que de trois orifices pour le liquide, qui sont ledit seul orifice d'entrée, un seul orifice de sortie, et ledit seul orifice intermédiaire du type sortie-entrée mixte,
**en ce qu'**un matériau antibactérien comportant de la résine iodée est prévu à l'intérieur d'au moins une partie de ladite première zone et est adapté pour transmettre un biocide dans le liquide en provenance de ladite source, et **en ce qu'**un matériau de retrait du biocide est reçu dans au moins une partie de ladite deuxième zone,
**en ce que** l'ensemble du liquide traité dans la première zone est collecté pour retrait en provenance dudit orifice intermédiaire du type sortie-entrée mixte,
et **en ce que** le liquide est retenu dans le réservoir de stockage pour permettre au biocide de tuer les bactéries s'y trouvant.

13. Procédé selon la revendication 12, dans lequel la sortie pour fluide de la première zone comporte un tube de retour central se prolongeant vers le bas au travers de la première zone et ayant une extrémité inférieure ouverte.

14. Procédé selon la revendication 12, dans lequel la sortie pour fluide de la première zone comporte une cavité de matériau et dans lequel le liquide traité dans la première zone est collecté dans la cavité de matériau et conduit vers un réservoir de stockage, puis renvoyé dans la cavité de matériau et forcé dans l'entrée de la deuxième zone.
